# EUROPEAN PATENT SPECIFICATION

(11) **EP 3 339 074 B1**
(45) Date of publication and mention of the grant of the patent: **04.03.2020**
(21) Application number: 17208776.9
(22) Date of filing: 20.12.2017
(51) Int. Cl.: B60K 13/04

(54) **VEHICLE BODY STRUCTURE**
FAHRZEUGKAROSSERIESTRUKTUR
CARROSSERIE DE VÉHICULE

(30) Priority: 20.12.2016 JP 2016246335
(43) Date of publication of application: 27.06.2018
(73) Proprietor: Mitsubishi Jidosha Kogyo Kabushiki Kaisha, Tokyo 108-8410 (JP); Mitsubishi Jidosha Engineering K.K., Aichi 444-8501 (JP)
(72) Inventor: YAMAMOTO, Masahiro, Tokyo 108-8410 (JP); SANO, Takayuki, Tokyo 108-8410 (JP); INDEN, Kazuto, Okazaki-shi, Aichi 444-8501 (JP)
(74) Representative: Vossius & Partner Patentanwälte Rechtsanwälte mbB

(56) References cited:
- DE-A1-102007 019 912
- JP-A- 2009 083 802

## Description

### Technical Field

The present invention relates to a vehicle body structure of a vehicle including an additive tank for exhaust purification.

### Background Art

Conventionally, it is known that an additive tank having reducing action on substances to be purified is mounted on a vehicle including an exhaust purification system for reducing and purifying an exhaust component. When the substances to be purified are nitrogen oxides (NOx), an additive such as an aqueous urea solution or an aqueous ammonia solution is stored in the tank. Additionally, it is proposed that an arrangement position of the tank is set, for example, below a floor of the vehicle (refer to JP-B-4826612). According to such a layout, vehicle interior space can be ensured and deterioration of the vehicle interior comfort due to leakage of the additive can be prevented.

JP 2009 083802 A discloses a lower chassis structure of a vehicle, wherein a floor portion protrudes to the interior of the vehicle and extends in the vehicle body front-back direction. The tunnel portion serves as the center of the rigidity of the vehicle body and includes a dash lower panel which divides an engine room and a vehicle compartment in the front-rear direction and a kick-up portion 3.

### Summary of the Invention

### Problems to be Solved by the Invention

By disposing the tank below the floor, the tank is close to an exhaust pipe, and therefore cooling performance of the tank and the additive may decrease. For example, the tank may be deformed or damaged under the influence of exhaust heat, or deterioration of the additive in the tank may occur. In order to prevent heat damage, it is considered that the tank and the exhaust pipe should be disposed away from each other. However, the space under the floor is limited, and it may be impossible to select a layout advantageous in heat dissipation.

In light of the above problems, one object of the present invention is to provide a vehicle body structure which improves the cooling performance of a tank stored with an additive. Incidentally, the present invention is not limited to this object, and operational effects which is derived from configurations shown in "Description of Embodiments" described later and cannot be obtained by the prior art can also be taken as other objects of the present invention.

### Means for Solving the Problems

(1) A vehicle body structure disclosed herein includes a main floor panel which has a backbone portion bulging toward a vehicle interior in a tunnel shape, and a rear floor panel forming a floor continuous with a vehicle rear of the main floor panel. In addition, a tank which is provided below the rear floor panel and stores an additive to be supplied to exhaust, and a muffler which is connected to an exhaust pipe and disposed in parallel with the tank in a vehicle width direction are included. Further, a passage portion which is provided between the tank and the muffler and disposed at a position displaced from a position opposite to the backbone portion to a left or right direction with respect to a center in the vehicle width direction is included so that the passage portion is not positioned directly rearward of the backbone portion. Further, a notched portion which is formed on at least one of the tank and the muffler positioned at a side opposite to a displacement direction of the passage portion and has an expanded shape from the passage portion toward a backbone portion side is included.
   Preferably, the backbone portion extends in a front-rear direction of the vehicle at a center portion in the vehicle width direction of the front floor panel. The passage portion is preferably disposed at a position (that is, a position which is not included in a portion where the backbone portion extends as it is, and is shifted to either the right or left from the portion where the backbone portion extends as it is) shifted from a direct rear of the backbone portion in the vehicle width direction.
(2) It is preferable that the passage portion is disposed at a position displaced toward a muffler side, and the tank is disposed at a position opposite to the backbone portion.
(3) It is preferable that the vehicle body structure further includes a rear suspension cross member which is provided between the backbone portion and the tank and extends in the vehicle width direction.
(4) It is preferable that the notched portion extends to a position opposite to the backbone portion.
(5) It is preferable that the muffler is connected with the exhaust pipe in the notched portion (or the passage portion).

### Effect of the Invention

By displacing the position of the passage portion in the vehicle width direction with respect to the backbone portion, the passage portion can be cooled by using a part of travel wind, among the travel wind passing through the backbone portion, diffused in the vehicle width direction by contacting front surfaces of the tank, and the muffler. Therefore, for example, local supercooling of the passage portion during traveling at high speed can be prevented, the cooling performance of the tank and the muffler can be improved, and an individual cooling state can be stabilized separately.

### Brief Description of Drawings

Fig. 1 is a bottom view of a vehicle to which a vehicle body structure according to an embodiment is applied.
Fig. 2 is a sectional view (a sectional view taken along a line A-A of Fig. 1) around a tank.
Fig. 3 is a bottom view around the tank.
Fig. 4 is a schematic perspective view around the tank.
Fig. 5A and 5B are schematic perspective views showing modifications of the vehicle body structure.

### Description of Embodiments

A vehicle body structure according to an embodiment will be described with reference to the drawings. The following embodiment is only illustrative, and is not intended to exclude application of various modifications or techniques which are not described explicitly in the following embodiment. Various modifications can be made to the configurations of the present embodiment, according to the claims.

### [1. Configuration]

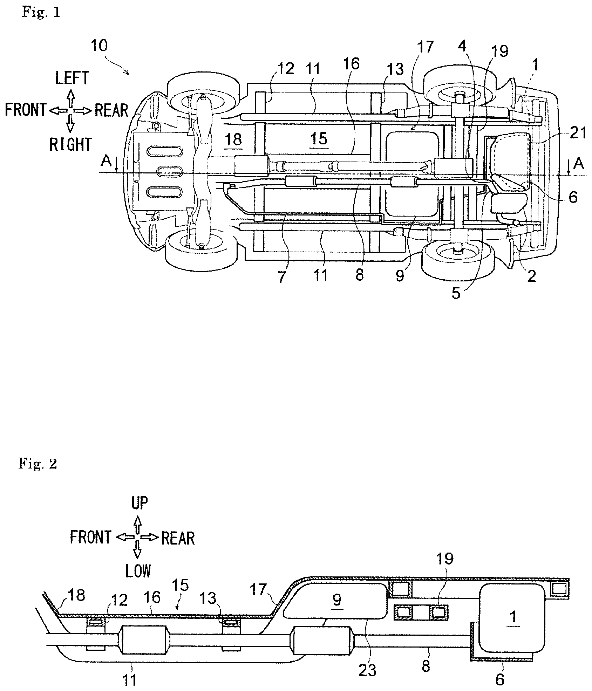

The vehicle body structure according to the present embodiment is applied to a vehicle 10 shown in Fig. 1. An engine, a transmission or the like are disposed in an engine room positioned frontward than a vehicle interior of the vehicle 10, and an exhaust pipe 8 is arranged below a floor in a front-rear direction. An arrangement position of the exhaust pipe 8 is below a backbone portion 16 longitudinally crossing a center of a main floor panel 15 (floor panel) in a vehicle width direction. The backbone portion 16 is a part of the main floor panel 15 bulging toward the vehicle interior in a tunnel shape. A front end portion of the exhaust pipe 8 is connected with the engine, and a rear end portion thereof is connected with a muffler 2 (a silencer, a muffler) disposed at a rear of the vehicle 10. As shown in Fig. 1, a propeller shaft is disposed in parallel with the exhaust pipe 8 below the backbone portion 16, when the vehicle 10 is a four-wheel drive.

A reduction catalyst, a post-stage catalyst or the like which purify nitrogen oxides (NOx) contained in exhaust of the engine are interposed in a path of the exhaust pipe 8. An injector which injects a reducing agent to be supplied to the exhaust is provided on an upstream side of the reduction catalyst. As the reducing agent, for example, an aqueous urea solution or an aqueous ammonia solution is used. An additive injected from the injector performs as the reducing agent which reduces the nitrogen oxides to nitrogen by the reduction catalyst. Such an exhaust purification system is widely used in automobiles, working machines, ships, power generation facilities, or the like equipped with a diesel engine or a lean burn engine. Further, a tank 1 for storing the additive is disposed adjacent to the muffler 2 which is disposed at a rear of the vehicle 10 and is connected to the injector via a supply pipe 7.

The main floor panel 15 is approximately a horizontal plane shape. A rear floor panel 17 forming a floor surface of a rear seat or a luggage compartment is disposed at a rear end portion of the main floor panel 15. The rear floor panel 17 forms a floor surface continuous with the main floor panel 15 at the rear of the main floor panel 15 in the vehicle 10. A dash panel 18 for partitioning the vehicle interior and the engine room is erected at a front end portion of the main floor panel 15. The rear floor panel 17 extends obliquely upward from a rear of the main floor panel 15 and then extends in a horizontal direction, so as to form a stair shape. Meanwhile, the dash panel 18 extends obliquely upward toward a front of the main floor panel 15. Further, the main floor panel 15, the dash panel 18, and the rear floor panel 17 may be formed separately, or may be formed integrally (for example, by bending a single plate). Fig. 2 shows an example in which the main floor panel 15, the dash panel 18, and the rear floor panel 17 are formed integrally.

Side members 11, a front floor cross member 12, and a rear floor cross member 13 which perform as frame members of a vehicle body are attached to a lower surface side of the main floor panel 15, the rear floor panel 17, and the dash panel 18. The side members 11, the front floor cross member 12, and the rear floor cross member 13 form a closed cross section structure on a lower surface of the main floor panel 15, the rear floor panel 17, and the dash panel 18. The side members 11 are provided on the left and right with space in the vehicle width direction therebetween, and extend in the front-rear direction of the vehicle 10. The front floor cross member 12 and the rear floor cross member 13 are provided with space in the front-rear direction, and extend in the vehicle width direction. These cross members 12, 13 penetrate through the side members 11, and extend to an outer side thereof. Therefore, the main floor panel 15 is supported in parallel crosses, and rigidity and strength of the vehicle interior floor surface are ensured.

Arrangement positions of the side members 11 are separately set at positions slightly inward from a left side surface and a right side surface of the vehicle 10. An arrangement position of the front floor cross member 12 is set near a boundary between the main floor panel 15 and the dash panel 18, and an arrangement position of the rear floor cross member 13 is set near a boundary between the main floor panel 15 and the rear floor panel 17. In the present embodiment, as shown in Fig. 2, the cross members 12, 13 are disposed, on the front end portion and the rear end portion of the main floor panel 15 respectively, at positions which are not positions where the dash panel 18 and the rear floor panel 17 rise (inclined parts). The backbone portion 16 is formed over the entire length from the front end portion to the rear end portion of the main floor panel 15 so as to connect with a rising portion of the dash panel 18 and a rising portion of the rear floor panel 17 in a horizontal direction.

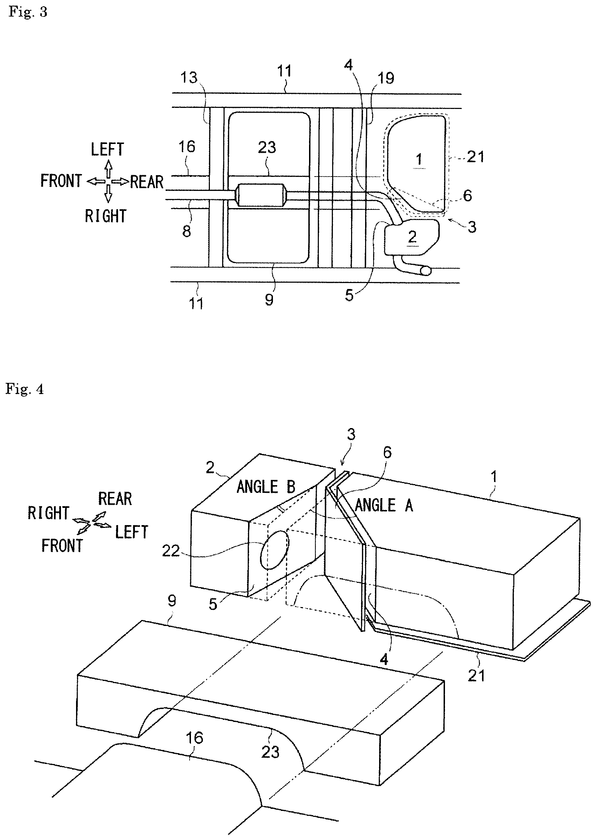

A fuel tank 9 for storing fuel of the engine mounted on the vehicle 10 is disposed below the rear floor panel 17 at the rear of the rear floor cross member 13. As shown in Fig. 1, the side members 11 are arranged on the left and right of the fuel tank 9, and the rear floor cross member 13 and a rear suspension cross member 19 (a cross member for rear suspension) are arranged at a front and a rear of the fuel tank 9. The rear suspension cross member 19 is a frame member for supporting the rear suspension, and is disposed to be connected with the left and right side members 11 near rear wheels. A general shape of the fuel tank 9 is a horizontally long rectangular parallelepiped shape. As shown in Fig. 3, the rear suspension cross member 19 according to the present embodiment is provided between the backbone portion 16 and the tank 1, and extends in the vehicle width direction.

In order to avoid the interference with the propeller shaft and the exhaust pipe 8 arranged below the backbone portion 16, a ventilation portion 23 having a shape recessed toward the inside of the fuel tank 9 is formed on a bottom surface of the fuel tank 9. The ventilation portion 23 is a part bulging upward in a tunnel shape from the bottom surface of the fuel tank 9, and has substantially the same shape as the backbone portion 16 in a front view of the vehicle 10. Therefore, a flow of travel wind passing through the backbone portion 16 and the ventilation portion 23 and heading rearward is formed.

The tank 1 is disposed adjacent to the muffler 2 in a vehicle width direction at the rear of the rear suspension cross member 19 and at a lower surface side of the rear floor panel 17. A clearance enough to allow the travel wind to pass through is provided between the tank 1 and the muffler 2. Hereinafter, the clearance is referred to as "passage portion 3". A position of the passage portion 3 in the vehicle width direction is set at a position displaced from a position opposite to the backbone portion 16 in the vehicle width direction. That is, the positions of the tank 1 and the muffler 2 are shifted to either a right or left direction with respect to a center in the vehicle width direction so that the clearance between the tank 1 and the muffler 2 is not positioned at a direct rear of the backbone portion 16. In other words, in a bottom view of the vehicle 10, the passage portion 3 is disposed at a position which is not included in a portion where the backbone portion 16 extends to the rear as it is, and is shifted to either the right or left from the portion where the backbone portion 16 extends to the rear as it is. In an example shown in Fig. 3, the tank 1 is positioned at a left side of the muffler 2, and a displacement direction of the passage portion 3 is a right side (a lower side in Fig. 3) of the vehicle 10.

A first notched portion 4 (notched portion) is formed on either one of the tank 1 and the muffler 2 which is positioned at a side opposite to the displacement direction of the passage portion 3. In Fig. 4, the first notched portion 4 is formed on the tank 1 positioned at a left side of the vehicle 10. The passage portion 3 is disposed at a position displaced from a muffler 2 side. The tank 1 is disposed at a position opposite to the backbone portion 16. The first notched portion 4 is a part provided so as to introduce a part of the travel wind passing through the backbone portion 16 to the passage portion 3. The first notched portion 4 has an expanded shape from the passage portion 3 toward a backbone portion 16 side. The shape of the first notched portion 4 can also be expressed as a tapered shape toward the rear of the vehicle 10. A heat shield 6 is disposed at an inner side of the first notched portion 4 so as to suppress transmission of exhaust heat to the tank 1. Meanwhile, a lower surface side of the tank 1 is covered with a tank cover 21 in a planar shape so as to prevent deformation or chipping wear caused by stones flying from a road surface and contamination due to muddy water.

As shown in Fig. 4, the passage portion 3 according to the present embodiment is provided with the first notched portion 4 formed by cutting out a front side face of the tank 1, and a second notched portion 5 (notched portion) formed by cutting out a front side face of the muffler 2. The first notched portion 4 is formed in a planar shape in which a normal line extends toward a right front of the vehicle 10. The first notched portion 4 has the expanded shape from the passage portion 3 toward the backbone portion 16 side. That is, the first notched portion 4 has a shape extending to a position opposite to the backbone portion 16. The second notched portion 5 is formed in a planar shape in which a normal line extends toward a left front of the vehicle 10. The second notched portion 5 has an expanded shape from the passage portion 3 toward a front. In a top view, the first notched portion 4 and the second notched portion 5 forms a shape in conformity with a V-shaped wedge shape. Additionally, the heat shield 6 is disposed substantially in parallel with a surface of the first notched portion 4.

As shown in Fig. 4, a notch angle A of the first notched portion 4 is formed larger than a notch angle B of the second notched portion 5. The notch angles A, B are angles that represent an extent to which the first notched portion 4 and the second notched portion 5 are open with respect to a front-rear direction in a horizontal plane. That is, in the horizontal plane, a rotation angle required to make a center line of the vehicle 10 parallel to the surface of the first notched portion 4 is the notch angle A, and a rotation angle required to make the center line of the vehicle 10 parallel to the surface of the second notched portion 5 is the notch angle B. Since the notch angle A is set larger than the notch angle B, a surface area of a portion on the surface of the tank 1 to be cooled by the travel wind is larger, and cooling performance of the tank 1 and the additive is improved.

An exhaust pipe connection port 22 which is a connecting location of the muffler 2 and the exhaust pipe 8 is disposed on the second notched portion 5. That is, the muffler 2 is connected to the exhaust pipe 8 in the second notched portion 5. Therefore, the connecting location of the muffler 2 and the exhaust pipe 8 where temperature tends to be high is efficiently cooled by the travel wind. In addition, since the first notched portion 4 is provided on a tank 1 side, spacious connection space is created, and an assembling workability and a mounting property are improved. The connecting location of the muffler 2 and the exhaust pipe 8 may be provided at the passage portion 3 when sufficient connection space is secured. That is, the muffler 2 may be configured to connect with the exhaust pipe 8 in the passage portion 3.

Dashed lines in Fig. 4 represent a shape obtained by projecting a cross-sectional shape of the backbone portion 16 after extending in a vehicle length direction on a front surface of the tank 1. Since the passage portion 3 is disposed at a position which is not a position at direct rear of the backbone portion 16, the travel wind passing through the backbone portion 16 is diffused in the vehicle width direction by contacting the front surface of the tank 1. Therefore, the travel wind passing through the backbone portion 16 does not flow into the passage portion 3 directly, and an excessive increase in the flow velocity is suppressed. Subsequently, a part of the diffused travel wind flows into a wedge-shaped space formed by the first notched portion 4 and the second notched portion 5, passes through the passage portion 3, and flows toward the rear of the vehicle 10. As described above, by providing the notched portions 4, 5, the decelerated travel wind is efficiently introduced into a passage portion 3 side, and a flow rate of the travel wind for cooling the tank 1 and the muffler 2 is secured.

### [2. Action Effect]

As indicated by dashed lines in Fig. 4, by displacing the passage portion 3 in the vehicle width direction from a position opposite to the backbone portion 16, the passage portion 3 can be cooled by using a part of the travel wind, among the travel wind passing through the backbone portion 16, diffused in the vehicle width direction by contacting the front surfaces of the tank 1 and the muffler 2. Therefore, the travel wind passing through the backbone portion 16 can be prevented from concentrating on the passage portion 3. Accordingly, local supercooling of the passage portion 3 during traveling at high speed can be prevented, the cooling performance of the tank 1 and the muffler 2 can be improved, and an individual cooling state can be stabilized separately.

In the above-described vehicle body structure, the tank 1 is disposed at a position opposite to the backbone portion 16. Therefore, a dimension of the tank 1 in the vehicle width direction can be increased compared with the muffler 2, and the tank capacity can be increased. In addition, since almost all of the travel wind passing through the backbone portion 16 will contact the front surface of the tank 1, the cooling performance of the tank 1 can be improved.

In the above-described vehicle body structure, the rear suspension cross member 19 is disposed between the backbone portion 16 and the tank 1. Therefore, the tank 1 and the muffler 2 can be protected from stepping stones passing through the backbone portion 16 by the rear suspension cross member 19. Accordingly, chipping wear or deformation of the tank 1 and the muffler 2, and contamination due to muddy water are prevented.

In the above-described vehicle body structure, as shown in Fig. 4, the first notched portion 4 is formed into a shape extending to the position opposite to the backbone portion 16. That is, in the front view of the vehicle 10, the first notched portion 4 is disposed at a position where the backbone portion 16 and the first notched portion 4 are overlapped with each other. Therefore, the travel wind can reliably flow into the passage portion 3, and the cooling performance of the tank 1 and the muffler 2 can be further improved.

In the above-described vehicle body structure, since the muffler 2 and the exhaust pipe 8 are connected with each other in the second notched portion 5, the connecting location between the muffler 2 and the exhaust pipe 8 where the temperature tends to be high can be efficiently cooled. Accordingly, the cooling performance of the muffler 2 can be further improved, and therefore the cooling performance of the tank 1 and the additive can be improved. Additionally, even in a case where the muffler 2 is connected with the exhaust pipe 8 in the passage portion 3, the same effect as that of the above-described vehicle body structure can be obtained, and the connecting location of the muffler 2 and the exhaust pipe 8 can be efficiently cooled.

As shown in Fig. 4, since the notch angle A is set larger than the notch angle B, the surface area of the portion on the surface of the tank 1 to be cooled by the travel wind can be larger, and the cooling performance of the tank 1 and the additive can be improved. Since the dimension of the tank 1 in the vehicle width direction is larger than that of the muffler 2, the passage portion 3 can be brought closer to the backbone portion 16 by making the notch angle A larger. Alternatively, an overlapping area of the passage portion 3 and the backbone portion 16 can be increased in the front view of the vehicle 10.

Therefore, the flow of the travel wind introduced into the passage portion 3 can further promoted, and the cooling performance of the tank 1 and the muffler 2 can be improved. In addition, by providing the ventilation portion 23 at the bottom surface of the fuel tank 9 disposed at a front of the muffler 2, the introduction of the travel wind into the passage portion 3 can be further promoted. Therefore, the cooling performance of the tank 1 and the muffler 2 can be further improved.

### [3. Modification]

In the above-described embodiment, although a reduction system for purifying NOx in the exhaust has been described in detail, a type of additive is not limited to urea water. In the exhaust purification system using a NOx selective reduction catalyst, ammonia water may be used instead of the urea water. In the exhaust purification system using a diesel particulate filter (DPF), hydrocarbon (HC, unburned fuel) may be injected into the exhaust pipe 8 to promote the combustion of particulate matters (PM). Therefore, the above-described vehicle body structure may also be applied to an exhaust gas purification system that supplies the ammonia water or the hydrocarbon instead of the urea water.

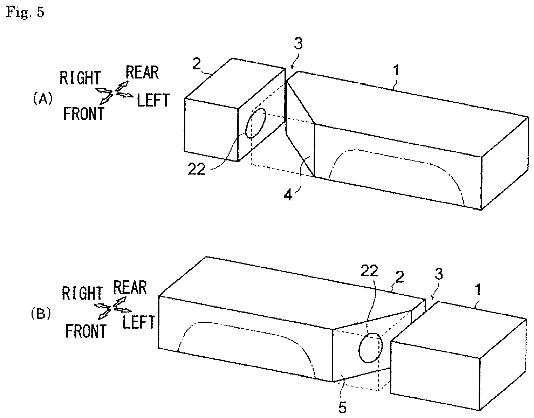

In the above-described embodiment, although the passage portion 3 shown in Fig. 4 has been described in detail, the specific shape of the passage portion 3 is not limited thereto. Fig. 5A shows a case where the first notched portion 4 is formed on the tank 1, and the second notched portion 5 is not formed on the muffler 2. Conversely, Fig. 5B shows a case where the first notched portion 4 is not formed on the tank 1, and the second notched portion 5 is formed on the muffler 2. In this manner, the first notched portion 4 and the second notched portion 5 may be appropriately omitted. As long as the notched portion is formed on at least one of the tank 1 and the muffler 2 which is positioned at a side opposite to the displacement direction of the passage portion 3, the travel wind passing through the backbone portion 16 may be introduced into the passage portion 3 after being decelerated, and the same effect as that of the above-described embodiment may be obtained.

In addition, the travel wind may be introduced into the passage portion 3 more smoothly, by forming the first notched portion 4 and the second notched portion 5 into a curved surface shape. By providing a part having a shape expanded from the passage portion 3 toward the backbone portion 16 side (a front side of the vehicle 10), the decelerated travel wind may be introduced into the passage portion 3 smoothly, and the same effect as that of the above-described embodiment may be obtained.

### Description of Reference Numerals

- 1: tank
- 2: muffler
- 3: passage portion
- 4: first notched portion (notched portion)
- 5: second notched portion (notched portion)
- 6: heat shield
- 7: supply pipe
- 8: exhaust pipe
- 9: fuel tank
- 10: vehicle
- 11: side member
- 12: front floor cross member
- 13: rear floor cross member
- 15: main floor panel (floor panel)
- 16: backbone portion
- 17: rear floor panel
- 18: dash panel
- 19: rear suspension cross member
- 21: tank cover
- 22: exhaust pipe connection port
- 23: ventilation portion

## Claims

1. A vehicle body structure comprising:
a main floor panel (15) which has a backbone portion (16) bulging toward a vehicle interior in a tunnel shape;
a rear floor panel (17) which forms a floor continuous with a vehicle rear of the main floor panel (15);
a tank (1) which is provided below the rear floor panel (17) and stores an additive to be supplied to exhaust; and
a muffler (2) which is connected to an exhaust pipe (8) and disposed in parallel with the tank (1) in a vehicle width direction,
wherein a passage portion (3) between the tank (1) and the muffler (2) is disposed at a position displaced from a position opposite to the backbone portion to a left or right direction with respect to a center in the vehicle width direction so that the passage portion (3) is not positioned directly rearward of the backbone portion (16), and
wherein one of the tank (1) and the muffler (2) which is positioned at a side opposite to a displacement direction of the passage portion (3) includes a notched portion (4) having an expanded shape from the passage portion (3) toward a backbone portion side.

2. The vehicle body structure according to claim 1,
wherein the passage portion (3) is disposed at a position displaced toward a muffler side, and
wherein the tank (1) is disposed at a position opposite to the backbone portion (3).

3. The vehicle body structure according to claim 1 or 2 further comprising:
a rear suspension cross member (19) which is provided between the backbone portion (16) and the tank (1) and extends in the vehicle width direction.

4. The vehicle body structure according to any one of claims 1 to 3,
wherein the notched portion (4) extends to a position opposite to the backbone portion (16).

5. The vehicle body structure according to any one of claims 1 to 4,
wherein the muffler (2) is connected with the exhaust pipe (8) in the notched portion (4).

6. The vehicle body structure according to any one of claims 1 to 5,
wherein the other one of the tank (1) and the muffler (2) includes another notched portion (5) having an expanded shape from the passage portion (3) toward the backbone portion side.

## Patentansprüche

1. Fahrzeugkarosseriestruktur, aufweisend:
eine Hauptbodenplatte (15) mit einem Rückgratteil (16), das sich tunnelförmig zu einem Fahrzeuginnenraum wölbt;
eine hintere Bodenplatte (17), die mit einem Fahrzeugheckteil der Hauptbodenplatte (15) einen kontinuierlichen Boden bildet;
einen Tank (1), der unter der hinteren Bodenplatte (17) vorgesehen ist und ein dem Abgas zuzusetzendes Additiv aufnimmt; und
einen Schalldämpfer (2), der mit einem Auspuffrohr (8) verbunden und in einer Fahrzeugbreitenrichtung parallel zum Tank (1) angeordnet ist,
wobei ein Durchgangsabschnitt (3) zwischen dem Tank (1) und dem Schalldämpfer (2) an einer Position angeordnet ist, die von einer dem Rückgratteil gegenüberliegenden Position in Bezug auf die Mitte in Fahrzeugbreitenrichtung nach links oder rechts versetzt ist, so dass der Durchgangsabschnitt (3) nicht unmittelbar hinter dem Rückgratteil (16) positioniert ist, und
wobei eines der Bauteile Tank (1) und Schalldämpfer (2), das an einer einer Versatzrichtung des Durchgangsabschnitts (3) gegenüberliegenden Seite positioniert ist, einen eingekerbten Abschnitt (4) aufweist, der von dem Durchgangsabschnitt (3) zu einer Rückgratteilseite eine aufgeweitete Form aufweist.

2. Fahrzeugkarosseriestruktur nach Anspruch 1,
wobei der Durchgangsabschnitt (3) an einer zur Schalldämpferseite versetzten Position angeordnet ist, und
wobei der Tank (1) an einer dem Rückgratteil (3) gegenüberliegenden Position angeordnet ist.

3. Fahrzeugkarosseriestruktur nach Anspruch 1 oder 2, ferner aufweisend:
einen Hinterachsen-Querträger (19), der zwischen dem Rückgratteil (16) und dem Tank (1) vorgesehen ist und sich in Fahrzeugbreitenrichtung erstreckt.

4. Fahrzeugkarosseriestruktur nach einem der Ansprüche 1 bis 3,
wobei sich der eingekerbte Abschnitt (4) zu einer dem Rückgratteil (16) gegenüberliegenden Position erstreckt.

5. Fahrzeugkarosseriestruktur nach einem der Ansprüche 1 bis 4,
wobei der Schalldämpfer (2) im eingekerbten Abschnitt (4) mit dem Auspuffrohr (8) verbunden ist.

6. Fahrzeugkarosseriestruktur nach einem der Ansprüche 1 bis 5,
wobei das jeweils andere der Bauteile Tank (1) und Schalldämpfer (2) einen weiteren eingekerbten Abschnitt (5) aufweist, der eine vom Durchgangsabschnitt (3) zur Rückgratteilseite hin aufgeweitete Form aufweist.

## Revendications

1. Carrosserie de véhicule comprenant :
un panneau de plancher principal (15) qui a une partie d'ossature centrale (16) se renflant vers un intérieur de véhicule selon une forme de tunnel ;
un panneau de plancher arrière (17) qui forme un plancher continu avec une partie arrière de véhicule du panneau de plancher principal (15) ;
un réservoir (1) qui est prévu au-dessous du panneau de plancher arrière (17) et stocke un additif à fournir pour l'échappement ; et
un silencieux (2) qui est raccordé à un tuyau d'échappement (8) et disposé parallèlement au réservoir (1) dans le sens de la largeur du véhicule,
dans laquelle une partie de passage (3) entre le réservoir (1) et le silencieux (2) est disposée dans une position déplacée par rapport à une position opposée à la partie d'ossature centrale vers une direction gauche ou droite par rapport à un centre dans le sens de la largeur du véhicule de sorte que la partie de passage (3) n'est pas positionnée directement vers l'arrière de la partie d'ossature centrale (16), et
dans laquelle l'un parmi le réservoir (1) et le silencieux (2), qui est positionné au niveau d'un côté opposé à une direction de déplacement de la partie de passage (3), comprend une partie entaillée (4) ayant une forme expansée allant de la partie de passage (3) vers un côté de la partie d'ossature centrale.

2. Carrosserie de véhicule selon la revendication 1,
dans laquelle la partie de passage (3) est disposée dans une position déplacée vers le côté du silencieux, et
dans laquelle le réservoir (1) est disposé dans une position opposée à la partie d'ossature centrale (3).

3. Carrosserie de véhicule selon la revendication 1 ou 2, comprenant en outre :
une traverse de suspension arrière (19) qui est prévue entre la partie d'ossature centrale (16) et le réservoir (1) et qui s'étend dans le sens de la largeur du véhicule.

4. Carrosserie de véhicule selon l'une quelconque des revendications 1 à 3,
dans laquelle la partie entaillée (4) s'étend dans une position opposée à la partie d'ossature centrale (16).

5. Carrosserie de véhicule selon l'une quelconque des revendications 1 à 4,
dans laquelle le silencieux (2) est raccordé au tuyau d'échappement (8) dans la partie entaillée (4).

6. Carrosserie de véhicule selon l'une quelconque des revendications 1 à 5,
dans laquelle l'autre parmi le réservoir (1) et le silencieux (2) comprend une autre partie entaillée (5) ayant une forme expansée, de la partie de passage (3) vers le côté de la partie d'ossature centrale.
